# EUROPÄISCHE PATENTANMELDUNG

(11) **EP 1 186 583 A1**
(43) Veröffentlichungstag der Anmeldung: **13.03.2002**
(21) Anmeldenummer: 00119534.6
(22) Anmeldetag: 07.09.2000
(51) Int. Cl.: C07B 37/04

(54) **Verfahren zur Durchführung von CC-Kupplungsreaktionen**

(71) Anmelder: Degussa AG, 40474 Düsseldorf (DE)
(72) Erfinder: Krauter, Jürgen Dr., 63768 Hösbach (DE); Pietsch, Jörg Dr., 63755 Alzenau (DE); Panster, Peter Dr., 63517 Rodenbach (DE); Köhler, Klaus Prof. Dr., 85737 Ismaning (DE); Heidenreich, Roland, 81825 München (DE)

(57) **Zusammenfassung**

Verfahren zur Durchführung von CC-Kupplungsreaktionen, insbesondere Heck- und Suzuki-Reaktion, in Gegenwart von geträgertem Palladium als Katalysator und einer Base in einem einphasigen oder mehrphasigen Lösemittelgemisch, bei dem sich Palladium während der Reaktion in charakteristischer Weise vom Träger ablöst und sich nach der Reaktion wieder abscheidet, und die Menge an nicht abgeschiedenem Palladium nach der Reaktion deutlich unter 5000 ppm, bezogen auf das eingesetzte Palladium, liegt.

## Beschreibung

Die Erfindung betrifft ein Verfahren zur Durchführung von CC-Kupplungsreaktionen, wie Heck-Reaktion und Varianten, Suzuki-Kupplung, Allylsubstitution, Sonogashira-Kupplung (Alkin-Kupplung) und Kumada-Kupplung, unter Einsatz heterogener Edelmetallpulverkatalysatoren.

Palladiumkatalysierte CC-Kupplungsreaktionen (zum Beispiel Suzuki-Kupplung, Allylsubstitution, Heck-Reaktion) spielen in der präparativen organischen Chemie eine wichtige Rolle. Insbesondere die Tolerierung vieler funktioneller Gruppen, die eine aufwendige Schutzgruppentechnik überflüssig macht, machen CC-Kupplungsreaktionen für die Feinchemie und die pharmazeutische Chemie besonders attraktiv.

Bekannt sind homogene Katalysatoren für CC-Kupplungsreaktionen. Im Produktionsmaßstab ist man bei diesen Katalysatoren gezwungen, das Palladium in einem weiteren Prozeßschritt aus der Reaktionslösung zu entfernen. Nachdem in den meisten Fällen das Edelmetall Palladium als katalytisch aktives Metall verwendet wird, muß eine möglichst quantitative Abtrennung erreicht werden. Zum einen kann so das teure Edelmetall wiedergewonnen werden, und zum anderen wird eine Kontamination des Produktes mit Edelmetall vermieden.

Mit der Verwendung homogener Katalysatoren für CC-Kupplungsreaktionen nach dem Stand der Technik sind zahlreiche Nachteile verbunden. Das Edelmetall muß nach erfolgter Reaktion aus dem Reaktionsgemisch aufwendig abgetrennt werden, was den Herstellprozeß verkompliziert. Homogene Katalysatoren setzen sich im allgemeinen aus dem Edelmetall und Liganden zusammen, die in einem bestimmten stöchiometrischen Verhältnis zueinander stehen. Diese Liganden gestalten die Reinigung des Produktes ebenfalls aufwendig. Sehr häufig werden Schutzgasbedingungen (Stickstoff- oder Argonatmosphäre) benötigt, damit der Katalysator vor oder während der Reaktion nicht zerstört wird.

Es ist bekannt, daß CC-Kupplungsreaktionen mit heterogenen Katalysatoren durchgeführt werden können. Augustine (R.L. Augustine, S. T. O'Leary, *J. Mol. Catal*. 1995, *95,* 277-285) beschreibt zum Beispiel die Umsetzung von aromatischen Carbonsäurechloriden mit Butylvinylether zu 2-Butoxyethenylbenzolen. Eisenstadt (EP 509 426) beschreibt die Herstellung von UV-Absorbern mit Hilfe heterogener Pd/C-Katalysatoren.

Mit der Verwendung heterogener Katalysatoren für CC-Kupplungsreaktionen nach dem Stand der Technik sind ebenfalls zahlreiche Probleme verknüpft. Häufig wird beim Einsatz von Halogenaromaten bei zum Beispiel der Heck-Reaktion eine unerwünschte Dehalogenierung beobachtet.

Im direkten Vergleich zwischen homogenen und heterogenen Katalysatorsystemen zeigen die heterogenen Systeme geringere Aktivitäten als die homogene Systeme.

Ein sehr wichtiger Aspekt, der in der Literatur oft nicht beachtet wird, ist die Edelmetallablösung vom Träger während und/oder nach der Reaktion. Sofern die Edelmetallablösung vom Träger überhaupt untersucht wird, ist diese oftmals so hoch, daß eine Kontamination des Produktes erfolgt. Die vollständige Abtrennung des Edelmetalls ist nach dem derzeitigen Stand der Technik sehr aufwendig beziehungsweise in der Regel sogar unmöglich.

Aufgabe der vorliegenden Erfindung ist es, ein Verfahren zur katalytischen Herstellung von CC-Kupplungsprodukten bereitzustellen, das die vorstehend beschriebenen Nachteile nicht aufweist.

Gegenstand der Erfindung ist ein Verfahren zur Durchführung von CC-Kupplungsreaktionen, wie Heck-Reaktionen und Varianten, Suzuki-Kupplung, Allylsubstitution, Sonogashira-Kupplung (Alkin-Kupplung) und Kamada-Kupplung, insbesondere Heck-Reaktionen und deren Varianten und Suzuki-Reaktion, und zur Abtrennung des eingesetzten Pd aus der Mutterlauge, welches dadurch gekennzeichnet ist, daß ein geträgerter Palladium-Katalysator eingesetzt wird. In einer Ausführungsform der Erfindung können keine Liganden mit dem Katalysator verwendet werden.

Erfindungsgemäß kann ein substituierter Aromat oder ein Halogen-substituiertes Olefin mit einem Olefin (Heck-Reaktion) beziehungsweise mit einer Arylboronsäure (Suzuki-Reaktion) in Gegenwart eines heterogenen pulverförmigen Palladium-Katalysators und in Gegenwart einer Base in einem organischen oder zweiphasigen Lösemittelgemisch bei Temperaturen zwischen 60 und 220 °C, bevorzugt 80 und 180 °C, besonders bevorzugt 120 und 160 °C (Heck-Reaktion) oder zwischen 40 und 180 °C, bevorzugt 60 und 160 °C, besonders bevorzugt 80 und 120 °C (Suzuki-Reaktion) umgesetzt werden.

Bei der Durchführung des erfindungsgemäßen Verfahrens kann der heterogene Palladiumkatalysator als wasserfeuchtes oder trockenes Pulver oder als zu Formkörpern gepreßtes wasserfeuchtes oder trockenes Pulver eingesetzt werden. Der Wassergehalt des trockenen Katalysators kann zwischen 0.5 und 3.5 Gew.-% betragen. Bevorzugt kann die wasserfeuchte Pulverform, d.h. 30 bis 70 Gew% Wasseranteil, bevorzugt 40 bis 60 Gew% Wasseranteil, besonders bevorzugt 45 bis 55 Gew% Wasseranteil eingesetzt werden.

Der heterogene Pd-Katalysator kann nach bekannten Methoden, wie sie zum Beispiel bei Pearlman (W. M. Pearlman, *Tetrahedron Lett.* 1967, *17,* 1663-1664) beschrieben sind, hergestellt werden. Darüber hinaus können die Katalysatoren bei der Degussa-Hüls AG als kommerziell erhältliche Katalysatoren zum Beispiel unter folgender Warenbezeichnung E 105 O/W 5% Pd bezogen werden (Die Edelmetallpulverkatalysator-Technologie Broschüre der Degussa-Hüls AG).

Die Katalysatoren können dadurch gekennzeichnet sein, daß sie nach der naßchemischen Präparation *nicht* in einem gesonderten Temperungsschritt (zum Beispiel mit Stickstoff oder Formiergas) behandelt werden. Durch thermische Nachbehandlung sinken die Aktivitäten der Katalysatoren deutlich, eine Verbessung der Edelmetallrückgewinnung wird dadurch nicht erreicht.

Die Katalysatoren können dadurch gekennzeichnet sein, daß sie eine Edelmetallbeladung von 0.1 bis 30 Gew% Pd enthalten, bevorzugt 1 bis 10 Gew%, besonders bevorzugt 5 Gew% aufweisen.

Die Katalysatoren können dadurch gekennzeichnet sein, daß sie keine scharfe schalenförmige Verteilung der Edelmetallkristallite im Katalysatorträgerkorn aufweisen. Die Eindringtiefe der Pd-Kristallite kann zwischen 50 nm und homogener Verteilung, bevorzugt > 300 nm, liegen. Besonders bevorzugt ist eine homogene Verteilung.

Die Katalysatoren können dadurch gekennzeichnet sein, daß die mittlere Edelmetalldispersion zwischen 10 und 60 %, bevorzugt zwischen 15 und 50 %, besonders bevorzugt zwischen 20 und 40 % beträgt. Die Dispersion errechnet sich aus den CO-Chemisorptionswerten, indem der gemessene Wert durch den maximal theoretisch möglichen für Pd (unter der Annahme eines stöchiometrischen Verhältnisses von 1:1 = Pd:CO) dividiert wird.

Die Katalysatoren können dadurch gekennzeichnet sein, daß sie einen geringen Reduktionsgrad (Der Reduktionsgrad ist definiert als das Verhältnis der gemessenen Wasserstoffmenge zur theoretisch zur vollständigen Reduktion des gesamten auf dem Träger befindlichen Edelmetalls nötigen Wasserstoffs.) zwischen 0 und 50 %, bevorzugt zwischen 0 und 40 %, besonders bevorzugt zwischen 0 und 20 % aufweisen. Die Messung erfolgt mit Hilfe TPR (Temperatur programmierte Reduktion).

Die Katalysatoren können dadurch gekennzeichnet sein, daß ein auf Kohlenstoff basierendes Trägermaterial (zum Beispiel Aktivkohle Holzkohle, Ruß, Graphit), bevorzugt Aktivkohle, besonders bevorzugt physikalisch aktivierte Aktivkohlen verwendet wird. Das Trägermaterial kann dadurch gekennzeichnet sein, daß es eine BET-Oberfläche von mindestens 800 m²/g (nach ASTM D3663),ein Mikroporenvolumen kleiner als 0.4 ml/g (nach ASTM D4365), ein Mesoporenvolumen größer 0.3 ml/g (nach ASTM D4641)und ein Makroporenvolumen größer 0.3 ml/g (nach ASTM D4284) aufweist.

Die Katalysatoren können dadurch gekennzeichnet sein, daß es während der Reaktion zu einer von der verwendeten Base und verwendeten Lösemittel abhängigen charakteristischen Ablösung des eingetragenen Pd vom Träger und während und nach der Reaktion zur Wiederabscheidung des vom Träger abgelösten Pd auf den Träger kommt, die von den entscheidenden Parametern Umsatz, Temperatur, Substrat, Base und Lösemittel abhängt, wobei bevorzugt vollständiger Umsatz, Temperaturen oberhalb 110 °C, reduzierende Basen wie Amine oder Formiate und unpolare Lösemittel sind, und insbesondere in zweiphasigen Lösemittelgemischen aus einem organischen Solvens und Wasser die Abscheidung besonders gut ist.

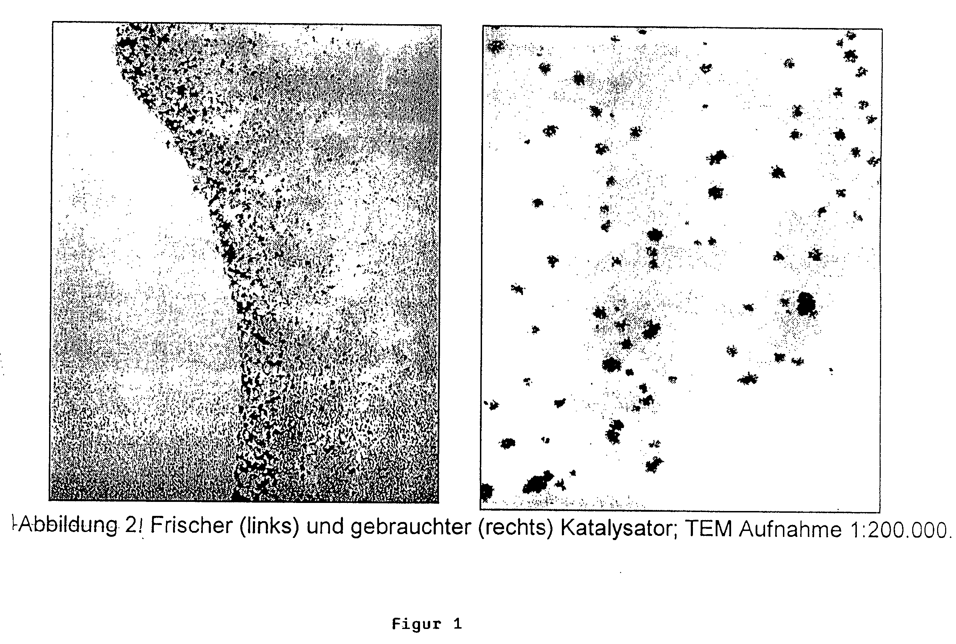

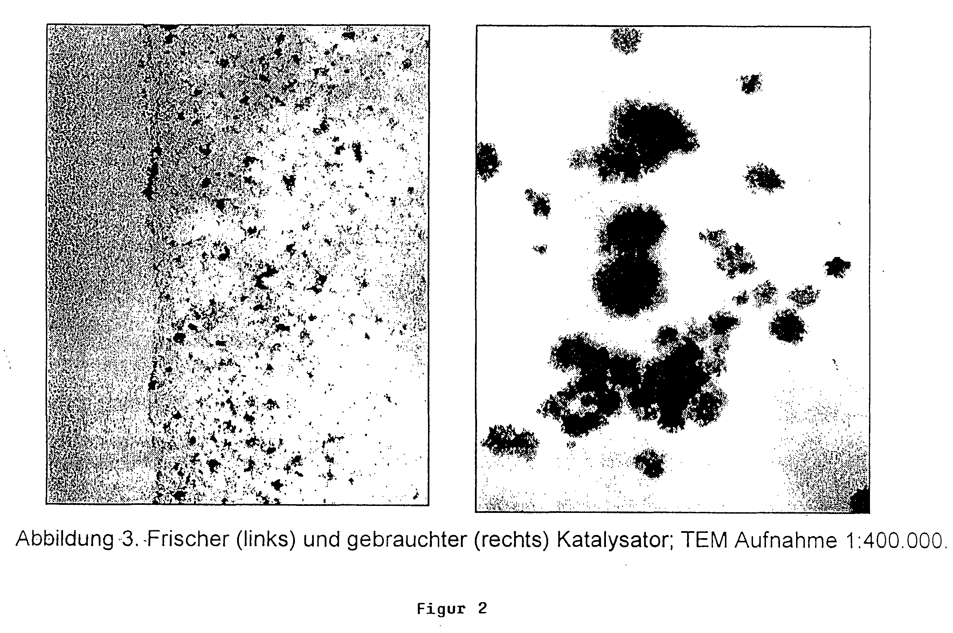

Dies kann durch geeignete Probennahme während der Reaktion und Pd-Bestimmungen nachgewiesen werden. Die Ablösung (min. 60 °C) und Abscheidung (min. 120 °C) sind durch ihre starke Temperaturabhängigkeit gekennzeichnet. Nach der Reaktion können die Pd-Primärkristallite agglomeriert über das gesamte Trägerkorn verteilt vorliegen. Die Primärkristallite sind darüber hinaus gegenüber den Pd-Kristalliten des frischen Katalysators auf ca. 10 nm angewachsen (siehe Abbildung 2, Abbildung 3 und Abbildung 4).

Die Katalysatoren können dadurch gekennzeichnet sein, daß während der katalytischen Reaktion Pd abgelöst wird und sich während und nach der Reaktion wieder auf dem Träger abscheidet. Dies kann durch geeignete Probennahme während der Reaktion und Pd-Bestimmungen nachgewiesen werden. Die Ablösung (min. 60 °C) und Abscheidung (min. 120 °C) sind durch ihre starke Temperaturabhängigkeit gekennzeichnet. Die Katalysatoren können dadurch gekennzeichnet sein, daß nach der Reaktion die Pd-Primärkristallite agglomeriert über das gesamte Trägerkorn verteilt vorliegen. Die Primärkristallite sind darüber hinaus gegenüber den Pd-Kristalliten des frischen Katalysators auf ca. 10 nm angewachsen (siehe Abbildung 2, Abbildung 3 und Abbildung 4).

Der geträgerte Palladiumkatalysator kann bei dem erfindungsgemäßen Verfahren mit einem Anteil von 0.01 bis 10 mol% Pd, bevorzugt 0.1 bis 5 mol% Pd, besonders bevorzugt von 0.1 bis 1 mol% Pd, bezogen auf die im Unterschuß eingesetzte Kupplungskomponente, eingesetzt werden.

Als Substrate können bei den erfindungsgemässen Verfahren die Substrate gemäß den Formeln I bis IV eingesetzt werden.

Für X in (I) als substituierte Aromaten kommen in Frage: Cl, Br, I, OTf, N₂⁺, COCl, COOCOR mit R zum Beispiel Alkyl(C₁-C₁₂), Aryl, vorzugsweise Br, I, OTf, N₂⁺.

R¹-R⁵ in (I) können unabhängig voneinander Wasserstoff, Alkyl(C₁-C₁₂), Aryl wie zum Beispiel Phenyl, Naphthyl, F, Cl, Br, I, CN, CF₃, CHO, COAlkyl(C₁-C₈), COOH, NH₂, NHAlkyl(C₁-C₈), N(Alkyl(C₁-C₈))₂, NO₂, NO, COOAlkyl(C₁-C₈), CONHAlkyl(C₁-C₈), OH, OAlkyl(C₁-C₈), OAryl, OCOAlkyl(C₁-C₈), OCOPhenyl, Alkenyl, Alkinyl, Si(Alkyl(C₁-C₅))₃ bedeuten. R⁵ und R⁴ oder R⁴ und R³ oder R³ und R² oder R² und R¹ können auch Teil eines annelierten aromatischen oder nicht aromatischen Systems sein. Als Reste R¹ bis R⁵ kommen beispielsweise Methyl-, Ethyl-, n-Propyl-, Isopropyl-, n-Butyl-, i-Butyl-, tert.-Butyl-, n- Pentyl-, i-Pentyl-, n-Hexyl-, n-Heptyl-, n-Octyl-, 2-Ethylhexyl-, 2-Ethyldecyl-, n-Decyl-, n-Dodecyl-, ferner Methoxy-, Ethoxy-, Propoxy-, Isopropoxy-, Butoxy-, Pentyloxy-, Hexyloxy-, Octyloxy-, 2-Ethylhexyloxy-, Decyloxy-, Dodecyloxy-, ferner Carbonsäure, Carbonsäuremethylester-, Carbonsäureethylester-, Carbonsäurepropylester-, Carbonsäurebutylester-, Carbonsäurepentylester-, Carbonsäurehexylester-, Carbonsäure-2-ethylhexylester-, Carbonsäurephenylester-, Formyl-, Carbonsäureamid-, Carbonsäuredimethylamid-, Carbonsäurediethylamid-, Carbonsäuremethylamid-, ferner N,N-Dimethylamino-, N,N-Diethylamino-, N-Methylamino-, N-Ethylamino-, N,N-Methylethylamino-, N,N-Dipropylamino-, N,N-Dibutylamino-, N-Morpholino-, Acetoxy-, Propionyloxy- und Butyryloxy-Gruppen in Betracht.

Für X in (II) als substituierte Olefine kommen in Frage: Cl, Br, I, OTf, OAc.

R⁶ bis R⁸ in (II) können unabhängig voneinander Wasserstoff, Alkyl(C₁-C₁₂), Aryl wie zum Beispiel Phenyl, Naphthyl, F, Cl, CN, CF₃, CHO, COAlkyl(C₁-C₈), COOH, NO₂, NO, COOAlkyl (C₁-C₈), COOPhenyl, CONHAlkyl (C₁-C₈), OAlkyl(C₁-C₈), OAryl, OCOAlkyl(C₁-C₈), OCOPhenyl, Alkenyl, Alkinyl bedeuten.

R⁹ bis R¹¹ in (III) können unabhängig voneinander Wasserstoff, Alkyl(C₁-C₁₂), Aryl wie zum Beispiel Phenyl, Naphthyl, F, Cl, CN, CF₃, CHO, COAlkyl(C₁-C₈), COOH, NO₂, NO, COOAlkyl(C₁-C₈), COOPhenyl, CONHAlkyl(C₁-C₈), OAlkyl(C₁-C₈), OAryl, OCOAlkyl(C₁-C₈), OCOPhenyl, Alkenyl, Alkinyl bedeuten.

Für X in (IV) als Arylboronsäure kommen in Frage: OM mit M einem einwertigen Kation wie Li, Na, K oder OH.

R¹² bis R¹⁶ in (IV) können unabhängig voneinander Wasserstoff, Alkyl(C₁-C₁₂), Aryl wie zum Beispiel Phenyl, Naphthyl, F, Cl, Br, I, CN, CF₃, CHO, COAlkyl(C₁-C₈), COOH, NH₂, NHAlkyl(C₁-C₈), N(Alkyl(C₁-C₈))₂, NO₂, NO, COOAlkyl(C₁-C₈), CONHAlkyl(C₁-C₈), OH, OAlkyl(C₁-C₈), OAryl, OCOAlkyl(C₁-C₈), OCOPhenyl, Alkenyl, Alkinyl, Si(Alkyl(C₁-C₅))₃ bedeuten. R¹⁶ und R¹⁵ oder R¹⁵ und R¹⁴ oder R¹⁴ und R¹³ oder R¹³ und R¹² können auch Teil eines annelierten aromatischen oder nicht aromatischen Systems sein.

Als Reste R¹ bis R⁵ kommen beispielsweise Methyl-, Ethyl-, n-Propyl-, Isopropyl-, n-Butyl-, i-Butyl-, tert.-Butyl-, n-Pentyl-, i-Pentyl-, n-Hexyl-, n-Heptyl-, n-Octyl-, 2-Ethylhexyl-, 2-Ethyldecyl-, n-Decyl-, n-Dodecyl-, ferner Methoxy-, Ethoxy-, Propoxy-, Isopropoxy-, Butoxy-, Pentyloxy-, Hexyloxy-, Octyloxy-, 2-Ethylhexyloxy-, Decyloxy-, Dodecyloxy-, ferner Carbonsäure-, Carbonsäuremethylester-, Carbonsäureethylester-, Carbonsäurepropylester-, Carbonsäurebutylester-, Carbonsäurepentylester-, Carbonsäurehexylester-, Carbonsäure-2-ethylhexylester-, Carbonsäurephenylester-, Formyl-, Carbonsäureamid-, Carbonsäuredimethylamid-, Carbonsäurediethylamid-, Carbonsäuremethylamid-, ferner N,N-Dimethylamino-, N,N-Diethylamino-, N-Methylamino-, N-Ethylamino-, N,N-Methylethylamino-, N,N-Dipropylamino-, N,N-Dibutylamino-, N-Morpholino-, Acetoxy-, Propionyloxy- und Butyryloxy-Gruppen in Betracht.

Als Lösungsmittel können im allgemeinen aprotische und protische organische Lösemittel, mit Ausnahme von Carbonsäuren, sowie Wasser und Mischungen daraus, besonders bevorzugt zweiphasige Mischungen aus einem organischen Lösemittel und Wasser eingesetzt werden.

Geeignete Lösemittel sind beispielsweise gegebenenfalls Dimethylacetamid (DMAc), Dimethylformamid (DMF), *N*-Methylpyrrolidon (NMP), Tetrahydrofuran (THF), Toluol, Dimethylsulfoxid (DMSO), Wasser oder Isopropanol.

Bei Verwendung eines nicht mischbaren Lösemittelgemisches aus organischem Solvens und Wasser (Zweiphasengemisch) kann der Katalysator sich ausschließlich in der der Polarität der Trägeroberfläche am ähnlichsten Phase befinden, und die an der Reaktion beteiligten oder bei der Reaktion entstehenden Salze sich in der Wasserphase befinden.

Wird ein einphasiges Lösemittelgesmisch verwendet, sind die Reaktanden und der Katalysator in einem Lösemittel oder mischbaren Lösemittelgemisch gelöst beziehungsweise suspendiert. Wird ein zweiphasiges Lösemittelgemisch verwendet, findet sich der Katalysator entsprechend der Polarität der Trägeroberfläche in der Phase, die der Polarität der Trägeroberfläche am ähnlichsten ist. Bei Verwendung zweier nicht mischbarer Lösemittel können so alle oder einige Reaktanden und der Katalysator in verschiedenen Phasen vorliegen. Bei Verwendung zum Beispiel eines Lösemittelgemisches Toluol/Wasser findet sich der Katalysator ausschließlich in der Toluolphase, wohingegen die an der Reaktion beteiligten oder bei der Reaktion entstehenden Salze sich in der Wasserphase befinden. Dies kann gegebenenfalls zur Abtrennung des Katalysators verwendet werden. Bei Verwendung eines nicht mischbaren Lösemittelgemisches kann die den Katalysator enthaltende Phase einfach durch Dekantation abgetrennt werden. Das organische Lösemittel beziehungsweise Lösemittelgemisch wird zweckmäßig in der 0.1 bis 500-fachen, besonders bevorzugt in der 1 bis 100-fachen Gewichtsmenge, bezogen auf den eingesetzten substituierten Aromaten (I) oder das substituierte Olefin (II) beziehungsweise das Boronsäurederivat (III) zugesetzt.

Basen, die bei dem erfindungsgemäßen Verfahren vorzugsweise Verwendung finden, sind Alkali- und Erdalkalimetallhydroxide, wie LiOH, NaOH, KOH, RbOH, CsOH, Mg(OH)₂, Ca(OH)₂ oder Sr(OH)₂, Alkali- und Erdalkalimetallcarbonate, wie Li₂CO₃, Na₂CO₃, K₂CO₃, Rb₂CO₃, Cs₂CO₃, MgCO₃, CaCO₃ oder SrCO₃, Alkalimetallhydrogencarbonate, wie LiHCO₃, NaHCO₃, KHCO₃ RbHCO₃ oder CsHCO₃, Alkali- und Erdalkalimetallacetate, wie LiOAc, NaOAc, KOAc, RbOAc, CsOAc, Mg(OAc)₂ oder Ca(OAc)₂, Alkali- und Erdalkalimetallformiate, wie LiHCOO, NaHCOO, KHCOO, RbHCOO, CsHCOO, Mg(HCOO)₂, Ca(HCOO)₂ oder Sr(HCOO)₂, Alkali- und Erdalkalimetallalkoholate, wie zum Beispiel LiO*t*Bu, NaO*t*Bu, KO*t*Bu, RbO*t*Bu, LiO*i*Bu, NaO*i*Bu, KO*i*Bu, RbO*i*Bu, LiOEt, NaOEt, KOEt, RbOEt, LiOMe, NaOMe, KOMe oder RbOMe, primäre, sekundäre und tertiäre Amine, wie zum Beispiel Triethylamin, Ethyldiisopropylamin, Tri-*n*-butylamin, sowie Mischungen zweier und mehrerer Basen aus der gleichen Gruppe oder den verschiedenen Guppen.

Bei dem erfindungsgemäßen Verfahren kann die Base in einem Anteil von 100-500 mol%, bezogen auf Verbindungen gemäß den Formeln (I), (II) oder (IV) eingesetzt werden.

Das erfindungsmäßige Verfahren kann bei Temperaturen zwischen 60 und 220 °C, bevorzugt zwischen 100 und 180 °C, besonders bevorzugt zwischen 120 und 160 °C (Heck-Reaktion) beziehungsweise bei Temperaturen'zwischen 40 und 180 °C, bevorzugt zwischen 60 und 140 °C, besonders bevorzugt zwischen 80 und 100 °C (Suzuki-Reaktion) durchgeführt werden.

Der Druck, bei dem das erfindungsgemäße Verfahren durchgeführt wird, ist nur bei gasförmigen Edukten relevant. Bevorzugt ist hier Atmosphärendruck, bei gasförmigen Edukten ist der angewandte Druck unkritisch.

Zur Durchführung der Reaktion im Sinne des erfindungsgemäßen Verfahrens wird der heterogene Palladiumkatalysator in der Reaktionsmischung, bestehend aus Edukten, Lösemittel beziehungsweise Lösemittelgemisch und Base beziehungsweise Basengemisch suspendiert. Dabei kann, muß aber nicht, unter inerten Gasbedingungen bearbeitet werden (zum Beispiel Stickstoffatmosphäre). Die verwendeten Lösemittel können, müssen aber nicht getrocknet eingesetzt werden. Bevorzugt sind nicht getrocknete Lösemittel.

Während der Reaktion kommt es in einer von der verwendeten Base charakteristischen Ablösung des eingetragenen Pd vom Träger und zur Abscheidung des vom Träger abgelösten Pd auf den Träger. Die entscheidenden Parameter für die Abscheidung des Pd auf dem Träger sind Umsatz, Temperatur, Substrat, Base und Lösemittel. Dabei gilt, daß gegen und nach vollständigem Umsatz oberhalb 110 °C bei elektronenreichen Aromaten, reduzierenden Basen (Aminen oder Formiaten) und unpolaren Lösemitteln, insbesondere in zweiphasigen Lösemittelgemischen aus einem organischen Solvens und Wasser, die Abscheidung besonders gut ist und deutlich unter 5000 ppm liegen kann.

So kann der Anteil des nach der Reaktion in der Muttelauge verbleibenden Pd geringer als 5000 ppm (bezogen auf die anfänglich eingetragene Pd-Menge), bevorzugt geringer 2500 ppm, besonders bevorzugt geringer 500 ppm sein.

Mit dem erfindungsgemäßen Verfahren ist es überraschenderweise möglich, daß für heterogene Systeme bislang ungekannte Aktivitäten erreicht werden können. Der direkte Vergleich zu einem bekannten homogenen Katalysatorsystem zeigt die gleiche Aktivität wie sie für das erfindungsgemäße Verfahren gefunden werden. (Tabelle 10(Heck-Reaktion), Tabelle 12(Suzuki-Reaktion)). In der Literatur finden sich keine in der Aktivität so hohen Katalysatorsysteme für die hier umgesetzten Substrate. Im weiteren ist besonders überraschend, daß nicht wie bei DE 4236103 A1 beschrieben Liganden zum heterogenen Katalysator gegeben werden müssen, um eine hohe Aktivität zu erreichen. Es ist sogar so, daß Liganden, wie zum Beispiel Triphenylphosphan, Nachteile hinsichtlich Aktivität und Katalysatorabtrennung bedeuten.

Shmidt (A. F. Shmidt, L. V. Mavetova, *Kin. Catal*. 1996, *37,* 406-408.) beschreibt für Iodaromaten eine Ablösung des Pd zwischen 14 und 46 %. Eisenstadt (A. Eisenstadt, Y. Keren, (IMI /TAMI Institute for Research & Development Ltd., EP 0 509 426 A2) findet im aufgearbeiteten Pd/C-Katalysator nur noch 86.5 % Pd. Arai (F. Zhao, M. Shirai, M. Arai, *J. Mol. Catal*. *A Chem.* 2000, *154*, 39-44.) untersucht ebenfalls den zeitlichen Verlauf der Pd-Ablösung, findet allerdings keine weitgehende Abscheidung auf dem Träger und schlußfolgert daraus die mangelnde Anwendbarkeit der Pd/C-Katalysatoren für diese Reaktion. Für Suzuki-Reaktionen wurden in der Literatur bislang keine systematischen Untersuchungen zur Pd-Ablösung durchgeführt. Das erfindungsgemäße Verfahren ist des weiteren insofern besonders überraschend, als daß die Wiederabscheidung des in Lösung gegangenen Pd bislang ungekannt hohe Werte erreicht und die in der Literatur beschriebenen bei weitem übertrifft.

Das erfindungsgemäße Verfahren ist schließlich insofern besonders überraschend, als daß keine Dehalogenierungsprodukte gefunden werden. Dies gilt sowohl für die Heck wie auch die Suzuki-Reaktion. Arai (F. Zhao, B. M. Bhanage, M. Shirai, M. *Arai, Chem. Eur. J.* 2000, 6, No. 5, 843-848.) beschreibt für Bromaromaten, daß das Hauptprodukt der dehalogenierte Bromaromat ist.

### Beispiele

### Herstellung des Katalysators

Die Katalysatoren werden nach den dem Fachmann geläufigen Verfahren hergestellt, indem ein geeignetes Trägermaterial in Wasser suspendiert, mit einer geeigneten Edelmetallverbindung imprägniert und durch den Einsatz einer geeigneten Base das Edelmetall auf dem Träger fixiert wird. Gegebenenfalls kann sich ein Reduktionsschritt anschließen. Bei Pearlman (W. M. Pearlman, *Tetrahedron Lett.* 1967, *17,* 1663-1664) findet sich eine dem Fachmann bekannte Literaturstelle zur Herstellung von pulverförmigen Edelmetallkatalysatoren. Darüber hinaus sind Katalysatoren zum Beispiel bei der Degussa-Hüls AG unter den in Tabelle 1 aufgeführten Produktnamen zu beziehen. Die Beschränkung auf die sechs genannten Katalysatoren aus Tabelle 1 bedeutet keine Einschränkung hinsichtlich der Wirksamkeit anderer Degussa-Hüls-Pd/C-Katalysatoren für das erfindungsgemäße Verfahren.

**Tabelle 1.**

| Beispiele geeigneter kommerzieller Degussa-Hüls Katalysatoren | |
|---|---|
| Nr. | Katalysator |
| 1 | E 105 NN/W 5% Pd |
| | |
| 2 | E 105 R/W 5% Pd |
| | |
| 3 | E 105 O/W 5% Pd |
| | |
| 4 | E 105 RO/W 5% Pd |
| | |
| 5 | E 105 KR/W 5% Pd |
| | |
| 6 | E 105 Y/W 5% Pd |

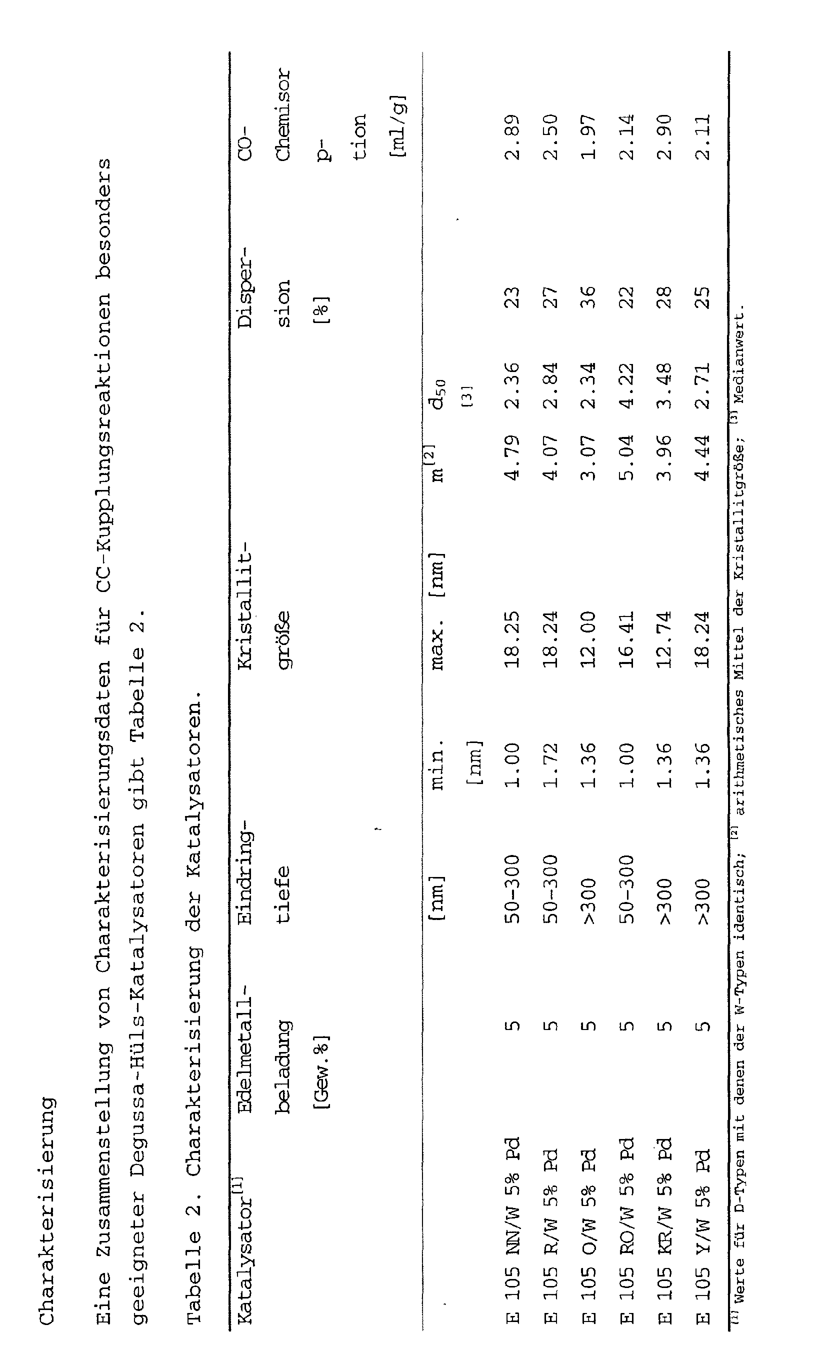

### Gebrauchter Katalysator

Sowohl die frischen als auch die gebrauchten Katalysatoren können zum Beispiel mit Hilfe TEM untersucht werden. Abbildung 1 und Abbildung 2 zeigen den frischen und gebrauchten Katalysator E 105 O/W 5% Pd.

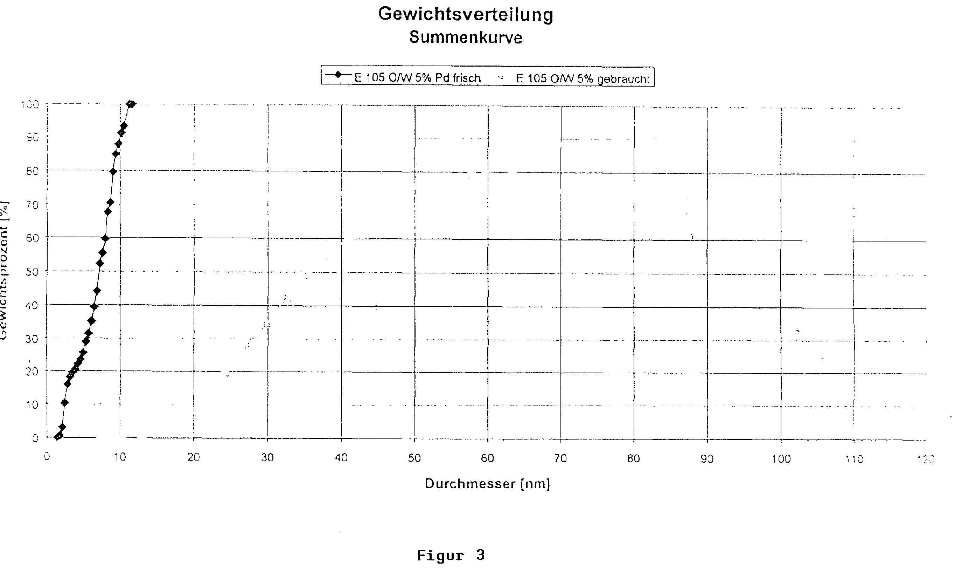

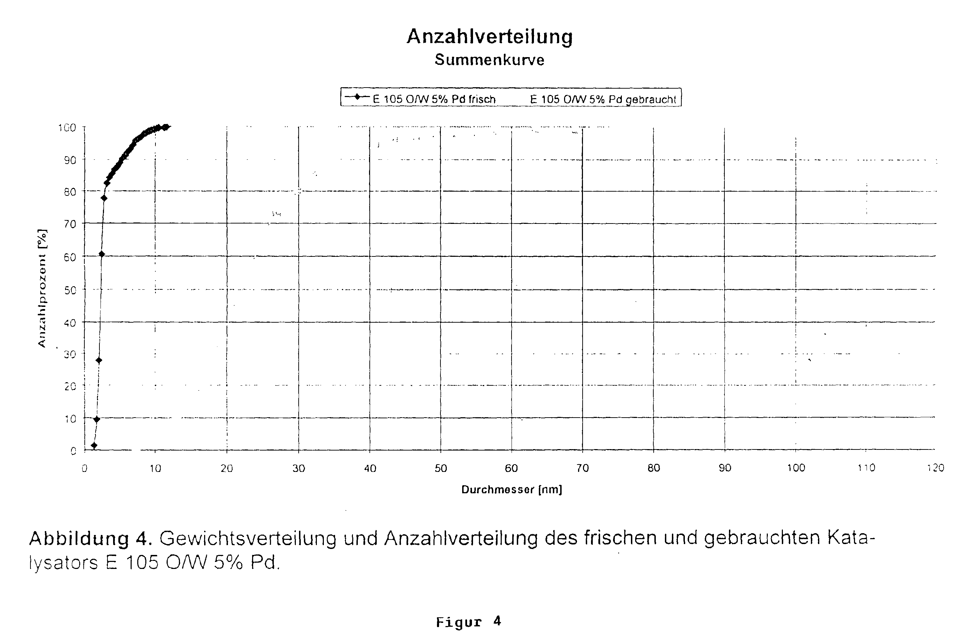

Durch optische Auswertemethoden läßt sich das Partikelgrößenwachstum auch quantifizieren (siehe Figuren 3 und 4).

### Allgemeine Arbeitsvorschrift 1 (Heck-Reaktion)

Erläuterung: Die Angaben zu den Pd-Leaching Werten beziehen sich auf den Anteil Pd in ppm, der sich nach der Reaktion und Abflitrieren des Katalysators sich in der Mutterlauge befindet. Die Angabe in ppm bezieht sich auf die zu Beginn der Reaktion eingetragene Pd-Menge, d.h. 10000 ppm Pd entsprechen einer Pd-Ablösung von 1 % (99% noch auf dem Träger).

Im Katalysatorcode finden sich die Buchstaben W und D, die für feucht (W) (ca. 45-55 % Wassergehalt) bzw. trocken (D) (ca. 2 % Wassergehalt) stehen.

10 mmol substituierter Aromat (I) oder 10 mmol substituiertes Olefin (II), 12 mmol Base, 500 mg Diethylenglycoldibutylether als interner Standard und die gewünschte Menge des jeweiligen Katalysators werden in einem Druckrohr eingewogen. Die Feststoffe werden in 10 ml Lösemittel suspendiert beziehungsweise gelöst, wobei das Lösemittel mittels einer Eppendorfpipette zudosiert wird (10 ml). Es werden 12 mmol Olefin (III) zugegeben und nach 5 min Entgasen mit Argon (Reinheit 4.6) (optionaler Schritt) wird das verschlossene Druckrohr in das auf die Reaktionstemperatur vorgeheizte Ölbad gebracht. Nach erfolgter Reaktion (GC-Kontrolle) wird 1 ml der Reaktionslösung entnommen und in einem Reagenzglas mit jeweils 1.5 ml Wasser und Dichlormethan extrahiert. Die organische Phase wird über Magnesiumsulfat getrocknet und mit Hilfe GC analysiert. Die restliche Reaktionslösung wird filtriert, aus dem Filtrat wird eine 5 ml Probe genommen und in einem Rollrandglas eingedampft. Der Rückstand wird mit Königswasser bei 80 °C aufgeschlossen, bis der gesamte Rückstand in Lösung gegangen ist. Die Lösung wird mit Hilfe ICP-OES oder ICP-MS auf Pd untersucht.

### Allgemeine Arbeitsvorschrift 2 (Suzuki-Reaktion)

10 mmol Phenylboronsäurederivat (IV), 12 mmol substituierter Aromat (I), 12 mmol Base, 500 mg Diethylenglycoldibutylether als interner Standard und die gewünschte Menge des jeweiligen Katalysators werden in einem Druckrohr eingewogen. Die Feststoffe werden in 10 ml Lösemittel gelöst bzw. suspendiert, wobei das Lösemittel mittels einer Eppendorfpipette zudosiert wird (10 ml). Nach 5 min Entgasen mit Argon (Reinheit 4.6) (optionaler Schritt) wird das verschlossene Druckrohr in das auf die Reaktionstemperatur vorgeheizte Ölbad gebracht. Nach erfolgter Reaktion (GC-Kontrolle) wird 1 ml der Reaktionslösung entnommen und in einem Reagenzglas mit jeweils 1.5 ml Wasser und Dichlormethan extrahiert. Die organische Phase wird über Magnesiumsulfat getrocknet und mit Hilfe GC analysiert. Die restliche Reaktionslösung wird filtriert und aus dem Filtrat wird eine 5 ml Probe genommen und in einem Rollrandglas eingedampft. Der Rückstand wird mit Königswasser bei 80 °C aufgeschlossen, bis der gesamte Rückstand in Lösung gegangen ist. Die Lösung wird mit Hilfe ICP-OES oder ICP-MS auf Pd untersucht.

### Beispiele 1-12

Die Beispiele 1-12 werden gemäß der allgemeinen Arbeitsvorschrift 1 durchgeführt. Als Katalysatoren und Substrate werden die in der Tabelle 3 aufgeführten eingesetzt. Die Bedingungen sind ebenfalls aus Tabelle 3 ersichtlich. Die Daten zeigen den Einfluß unterschiedlicher Katalysatoren auf Ausbeute und Selektivität.

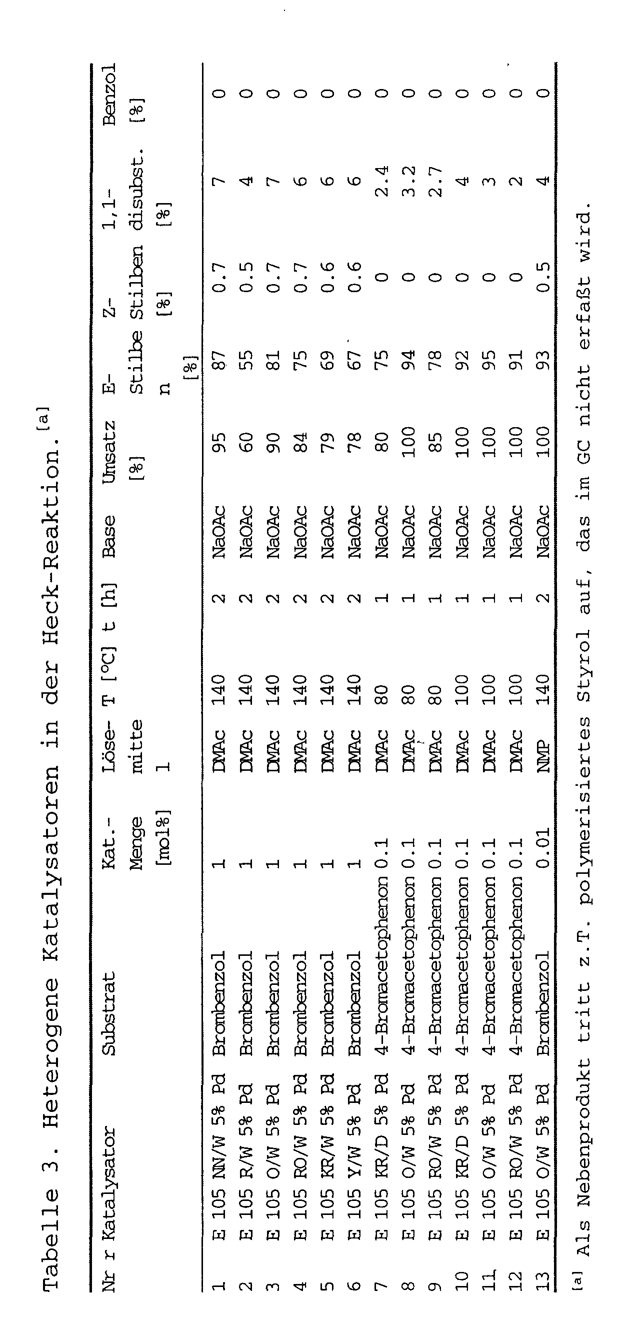

### Beispiele 14-15

Die Beispiele 14-15 werden gemäß der allgemeinen Arbeitsvorschrift 1 durchgeführt. Als Katalysatoren werden die in der Tabelle 4 aufgeführten Katalysatoren eingesetzt. Die Daten zeigen den Einfluß des Wassergehalts.

**Tabelle 4.**

| Trockene und feuchte Katalysatoren | | | |
|---|---|---|---|
| Nr. | Katalysator | Umsatz [%] | Pd-Leaching [ppm] |
| 14 | E 105 O/W 5% Pd | 94 | 3000 |
| | | | |
| 15 | E 105 O/D 5% Pd | 43 | 3000 |
| Bedingungen: Brombenzol, DMAc, NaOAc, 140 °C, 4h, 1mol% Pd. | | | |

### Beispiele 16-27

Die Beispiele 16-27 werden gemäß der allgemeinen Arbeitsvorschrift 1 durchgeführt. Als Katalysatoren werden die in der Tabelle 5 aufgeführten Katalysator eingesetzt und die Reaktionen bei den angegebenen Temperaturen durchgeführt. Die Daten zeigen den Einfluß der Temperatur auf Umsatz und Leaching.

**Tabelle 5.**

| Temperatureinfluß Leaching | | | | |
|---|---|---|---|---|
| Nr. | Katalysator | Temperatur [°C] | Umsatz [%] | Pd-Leaching [ppm] |
| 16 | E 105 O/W 5% Pd | 60 | 8 | 12000 |
| | | | | |
| 17 | E 105 O/W 5% Pd | 80 | 100 | 310000 |
| | | | | |
| 18 | E 105 O/W 5% Pd | 100 | 100 | 11000 |
| | | | | |
| 19 | E 105 O/W 5% Pd | 120 | 100 | 2000 |
| | | | | |
| 20 | E 105 RO/W 5% Pd | 60 | 8 | 13000 |
| | | | | |
| 21 | E 105 RO/W 5% Pd | 80 | 83 | 286000 |
| | | | | |
| 22 | E 105 RO/W 5% Pd | 100 | 100 | 50000 |
| | | | | |
| 23 | E 105 RO/W 5% Pd | 120 | 100 | 2500 |
| | | | | |
| 24 | E 105 KR/D 5% Pd | 60 | 8 | 11000 |
| | | | | |
| 25 | E 105 KR/D 5% Pd | 80 | 76 | 655000 |
| | | | | |
| 26 | E 105 KR/D 5% Pd | 100 | 100 | 97000 |
| | | | | |
| 27 | E 105 KR/D 5% Pd | 120 | 100 | 2500 |
| Bedingungen: 4-Bromacetophenon, DMAc, NaOAc, 4 h, 0.1mol% Pd. | | | | |

### Beispiele 28-30

Die Beispiele 28-30 werden gemäß der allgemeinen Arbeitsvorschrift 1 durchgeführt. Als Katalysatoren werden die in der Tabelle 6 aufgeführten Katalysatoren eingesetzt. Die Daten zeigen den Einfluß der Edelmetallbeladung auf Umsatz und Leaching.

**Tabelle 6.**

| Einfluß der Edelmetallbeladung | | | |
|---|---|---|---|
| Nr. | Katalysator | Umsatz [%] | Pd-Leaching [ppm] |
| 28 | E 105 O/W 1% Pd | 41 | 3000 |
| | | | |
| 29 | E 105 O/W 5% Pd | 94 | 3000 |
| | | | |
| 30 | E 105 O/W 10% Pd | 92 | 3000 |
| Bedingungen: Brombenzol, DMAc, NaOAc, 140 °C, 4h, 1mol% Pd. | | | |

### Beispiele 31-36

Die Beispiele 31-36 werden gemäß der allgemeinen Arbeitsvorschrift 1 durchgeführt. Als Katalysatoren werden die in Tabelle 7 aufgeführten Katalysatoren eingesetzt, und die Reaktionen unter Einsatz der angegebenen Basen durchgeführt. Die Daten zeigen den Einfluß der Base auf das Pd-Leaching.

**Tabelle 7.**

| Einfluß der Base auf das Pd-Leaching. | | | | |
|---|---|---|---|---|
| Nr. | Katalysator | Base | Lösemitt el | Pd-Leaching [ppm] |
| 31 | E 105 O/W 5% Pd | Tributylamin | NMP | 1500 |
| | | | | |
| 32 | E 105 O/W 5% Pd | NaOAc | NMP | 2000 |
| | | | | |
| 33 | E 105 O/W 5% Pd | NaHCOO | DMAc | 5 |
| | | | | |
| 34 | E 105 O/W 5% Pd | Triethylamin | DMAc | 400 |
| | | | | |
| 35 | E 105 O/W 5% Pd | NaHCOO/NaOAc(1:6) | DMAc | 800 |
| | | | | |
| 36 | E 105 O/W 5% Pd | NaOAc/Triethylamin | DMAc | 400 |
| Bedingungen: Brombenzol, 140 °C, 2 h, 1mol% Pd. | | | | |

### Beispiele 37-42

Die Beispiele 37-42 werden gemäß der allgemeinen Arbeitsvorschrift 1 durchgeführt, als Katalysatoren werden die in der Tabelle 8 aufgeführten Katalysatoren eingesetzt, und die Reaktionen mit den angegebenen Lösemittelgemischen durchgeführt. Die Daten zeigen den Einfluß der Dreiphasenreaktion auf Umsatz und Ausbeute.

**Tabelle 8.**

| Dreiphasenreaktion. | | | | |
|---|---|---|---|---|
| Nr. | Katalysator | Lösemittel | Umsatz [%] | Ausbeute [%] |
| 37 | E 105 O/W 5% Pd | Toluol | 1 | k.A. |
| | | | | |
| 38 | E 105 RO/W 5% Pd | Toluol | 1 | k.A. |
| | | | | |
| 39 | E 105 KR/D 5% Pd | Toluol | 5 | k.A. |
| | | | | |
| 40 | E 105 O/W 5% Pd | Toluol/Wasser (1:1) | 100 | 92 |
| | | | | |
| 41 | E 105 RO/W 5% Pd | Toluol/Wasser (1:1) | 100 | 80 |
| | | | | |
| 42 | E 105 KR/D 5% Pd | Toluol/Wasser (1:1) | 100 | 82 |
| Bedingungen: 4-Bromacetophenon, NaOAc, 120 °C, 2h, 0.1mol% Pd. | | | | |

Der Katalysator ist vollständig in der Toluolphase suspendiert. Die Salzfracht befindet sich ausschließlich in der Wasserphase. Die Abtrennnung der Wasserphase erfolgt mit Hilfe eines Scheidetrichters. Die Entfernung des Katalysators erfolgt durch Filtration.

### Vergleichsbeispiele 1-7

Die Vergleichsbeispiele 1-7 werden gemäß der allgemeinen Arbeitsvorschrift 1 durchgeführt, jedoch werden neben dem erfindungsgemäßen Katalysator E 105 O/W 5% Pd die in der Tabelle 9 aufgeführten Katalysatoren eingesetzt. Die Daten zeigen den Einfluß der Temperung auf Umsatz und Leaching.

**Tabelle 9.**

| Getemperte Katalysatoren | | | |
|---|---|---|---|
| Nr. | Katalysator | Umsatz [%] | Pd-Leaching [ppm] |
| 1 | E 105 O/W 5% Pd | 94 | 3000 |
| | | | |
| 2 | E 105 O/W 5% Pd 300 °C, N₂ | 59 | 2500 |
| | | | |
| 3 | E 105 O/W 5% Pd 500 °C, N₂ | 14 | 2500 |
| | | | |
| 4 | E 105 O/W 5% Pd 700 °C, N₂ | 1 | 2500 |
| | | | |
| 5 | E 105 O/W 5% Pd 700 °C, N₂+H₂ (95:5 Vol) | 58 | 3500 |
| | | | |
| 6 | E 105 O/W 5% Pd 300 °C, N₂+H₂ (95:5 Vol) | 14 | 2500 |
| | | | |
| 7 | E 105 O/W 5% Pd 500 °C, N₂+H₂ (95:5 Vol) | 5 | 4500 |
| Bedingungen: Brombenzol, DMAc, NaOAc, 140 °C, 4h, 1mol% Pd. | | | |

### Vergleichsbeispiel 7-10

Es wird, wie in der allgemeinen Arbeitsvorschrift 1 beschrieben, verfahren, jedoch werden anstelle der erfindungsgemäßen heterogenen Katalysatoren (zum Beispiel E 105 O/W 5% Pd) die in Tabelle 10 aufgeführten Katalysatoren eingesetzt. Die Daten zeigen die Gleichwertigkeit des heterogenen Systems im Vergleich zum homogenen, den Vorteil gegenüber der physikalischen Mischung aus Edelmetallquelle und Träger, sowie den Nachteil des Einsatzes von Liganden wie zum Beispiel Triphenylphosphan.

**Tabelle 10.**

| Vergleich zum homogenen und anderen heterogenen Systemen. | | | |
|---|---|---|---|
| Nr. | Katalysator | Umsatz [%] | Ausbeute (E-Stilben) [%] |
| 7 | E 105 O/W 5% Pd | 94 | 85 |
| | | | |
| 8 | Pd(OAc)₂^{[a]} / TPP^{[b]} (1:4) | 92 | 84 |
| | | | |
| 9 | E 105 O/W 5% Pd / TPP^{[b]} | 62 | 55 |
| | | | |
| 10 | Pd(OAc)₂^{[a]} / Träger von E 105 O/W 5% Pd | 15 | 6 |

| | | | |
|---|---|---|---|
| Bedingungen: Brombenzol, DMAc, NaOAc, 140 °C, 3h, 1mol% Pd. ^{[a]} 22.5 mg; | | | |
| ^{[b]} TPP = Triphenylphosphan, 105 mg. | | | |

### Vergleichsbeispiel 11-13

Es wird wie in der allgemeinen Arbeitsvorschrift 1 beschrieben, verfahren, jedoch werden anstelle der erfindungsgemäßen Katalysatoren verschiedene andere Katalysatoren eingesetzt. Die Daten zeigen die Überlegenheit des erfindungsgemäßen Verfahrens und der erfindungsgemäßen Pd/C-Katalysatoren.

**Tabelle 11.**

| andere heterogenen Systeme. | | | | | |
|---|---|---|---|---|---|
| Nr. | Katalysator | T [°C] | t [h] | Umsatz [%] | Ausbeute (E-Stilben) [%] |
| 11 | Pd/MgO 1% | 140 | 20 | 50 | 45 |
| | | | | | |
| 12 | Pd/Al₂O₃ 5% | 140 | 20 | 44 | 38 |
| | | | | | |
| 13 | Pd/C 5% ^{[a]} | 140 | 20 | 60 | 50 |

| | | | | | |
|---|---|---|---|---|---|
| [a]Aldrich 20568-0. Bedingungen: Brombenzol, Styrol, DMAc, NaOAc, 1 mol% Pd. | | | | | |

### Beispiele 43-47

Die Beispiele 43-47 werden gemäß der allgemeinen Arbeitsvorschrift 2 durchgeführt. Als Katalysatoren und Substrate werden die in der Tabelle 12 aufgeführten Katalysatoren eingesetzt. Die Bedingungen sind ebenfalls aus Tabelle 12 ersichtlich. Die Daten zeigen den Einfluß unterschiedlicher Katalysatoren auf Ausbeute und Selektivität.

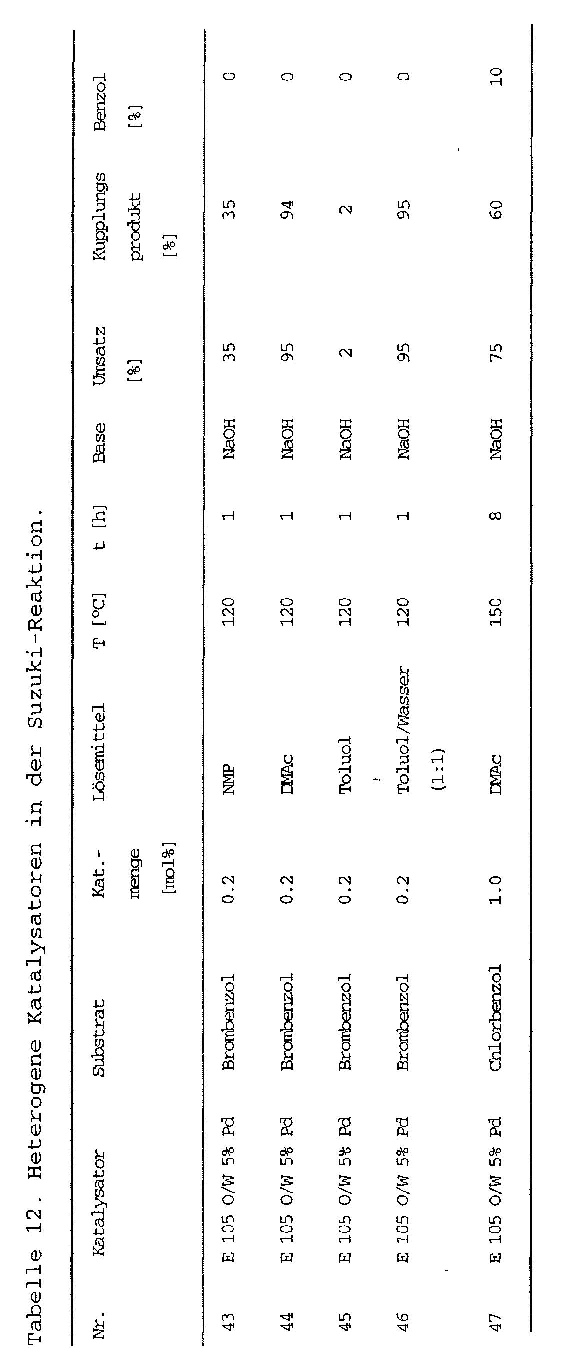

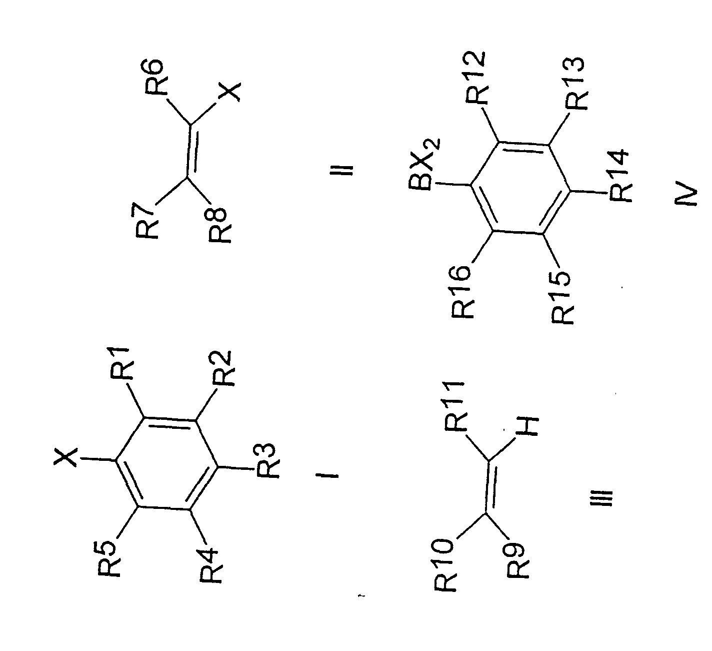

## Patentansprüche

1. Verfahren zur Durchführung von CC-Kupplungsreaktionen wie Heck-Reaktion und Varianten, Suzuki-Kupplung, Allylsubstitution, Sonogashira-Kupplung (Alkin-Kupplung) und Kumada-Kupplung, insbesondere Heck-Reaktion und deren Varianten und Suzuki-Reaktion, und zur Abtrennung des eingesetzten Pd aus der Mutterlauge, **dadurch gekennzeichnet, daß** ein geträgerter Palladium-Katalysator eingesetzt wird.

2. Verfahren nach Anspruch 1 **dadurch gekennzeichnet, daß** keine Liganden zusammen mit dem Katalysator verwendet werden.

3. Verfahren nach Ansprüchen 1-2 **dadurch gekennzeichnet, daß** die Katalysatoren nach der naßchemischen Präparation nicht in einem gesonderten Temperungsschritt behandelt werden.

4. Verfahren nach den Ansprüchen 1-3 **dadurch gekennzeichnet, daß** die Katalysatoren eine Edelmetallbeladung von 0.1 bis 30 Gew% Pd besitzen, bevorzugt 1 bis 10 Gew%, besonders bevorzugt 5 Gew%.

5. Verfahren nach den Ansprüchen 1-4 **dadurch gekennzeichnet, daß** die Eindringtiefe der Pd Kristallite auf den Katalysatorträgern zwischen 50 nm und homogener Verteilung liegt, bevorzugt > 300 nm ist, besonders bevorzugt eine homogene Verteilung vorliegt.

6. Verfahren nach den Ansprüchen 1-5 **dadurch gekennzeichnet, daß** die mittlere Edelmetalldispersion zwischen 10 und 60 % liegt, bevorzugt zwischen 15 und 50 %, besonders bevorzugt zwischen 20 und 40 %.

7. Verfahren nach den Ansprüchen 1-6 **dadurch gekennzeichnet, daß** die Katalysatoren einen geringen Reduktionsgrad zwischen 0 und 50 %, bevorzugt zwischen 0 und 40 %, besonders bevorzugt zwischen 0 und 20 % aufweisen.

8. Verfahren nach den Ansprüchen 1-7 **dadurch gekennzeichnet, daß** ein auf Kohlenstoff basierendes Trägermaterial wie Ruß, Aktivkohle, Holzkohle oder Graphit verwendet wird, bevorzugt Aktivkohle, besonders bevorzugt physikalisch aktivierte Aktivkohlen.

9. Verfahren nach den Ansprüchen 1-8 **dadurch gekennzeichnet, daß** das Trägermaterial eine BET-Oberfläche von mindestens 800 m²/g, ein Mikroporenvolumen kleiner als 0.4 ml/g, ein Mesoporenvolumen größer 0.3 ml/g und ein Makroporenvolumen größer 0.3 ml/g aufweist.

10. Verfahren nach den Ansprüchen 1-9 **dadurch**
**gekennzeichnet, daß** es während der Reaktion zu einer von der verwendeten Base und verwendeten Lösemitel abhängigen charakteristischen Ablösung des eingetragenen Pd vom Träger und während und nach der Reaktion zur Wiederabscheidung des vom Träger abgelösten Pd auf den Träger kommt, die von den entscheidenden Parametern Umsatz, Temperatur, Substrat, Base und Lösemittel abhängt, wobei bevorzugt vollständiger Umsatz, Temperaturen oberhalb 110 °C, reduzierende Basen wie Amine oder Formiate und unpolare Lösemittel sind, und insbesondere in zweiphasigen Lösemittelgemischen aus einem organischen Solvens und Wasser die Abscheidung besonders gut ist.

11. Verfahren nach den Ansprüchen 1-10 **dadurch**
**gekennzeichnet, daß** der Anteil des nach der Reaktion in der Muttelauge verbleibenden Pd geringer als 5000 ppm (bezogen auf die anfänglich eingetragene Pd-Menge) ist, bevorzugt geringer 2500 ppm, besonders bevorzugt geringer 500 ppm ist.

12. Verfahren nach den Ansprüchen 1-11 **dadurch**
**gekennzeichnet, daß** der geträgerte Palladiumkatalysator mit einem Anteil von 0.01 bis 10 mol% Pd, bevorzugt 0.1 bis 5 mol% Pd, besonders bevorzugt von 0.1 bis 1 mol% Pd bezogen auf die im Unterschuß eingesetzte Kupplungskomponente eingesetzt wird.

13. Verfahren nach den Ansprüchen 1-12 **dadurch**
**gekennzeichnet, daß** für X in (I) Cl, Br, I, OTf, N₂⁺, COCl, COOCOR mit R zum Beispiel Alkyl(C₁-C₁₂), Aryl bedeuten, R¹-R⁵ in (I) unabhängig voneinander Wasserstoff, Alkyl(C₁-C₁₂), Aryl wie zum Beispiel Phenyl, Naphthyl, F, Cl, Br, I, CN, CF₃, CHO, COAlkyl(C₁-C₈), COOH, NH₂, NHAlkyl(C₁-C₈), N(Alkyl(C₁-C₈))₂, NO₂, NO, COOAlkyl(C₁-C₈), CONHAlkyl(C₁-C₈), OH, OAlkyl(C₁-C₈), OAryl, OCOAlkyl(C₁-C₈), OCOPhenyl, Alkenyl, Alkinyl, Si(Alkyl(C₁-C₅))₃ bedeuten, wobei R⁵ und R⁴ oder R⁴ und R³ oder R³ und R² oder R² und R¹ auch Teil eines annelierten aromatischen oder nicht aromatischen Systems sein können, X in (II) Cl, Br, I, OTf, OAc bedeuten, R⁶ bis R⁸ in (II) unabhängig voneinander Wasserstoff, Alkyl(C₁-C₁₂), Aryl wie zum Beispiel Phenyl, Naphthyl, F, Cl, CN, CF₃, CHO, COAlkyl(C₁-C₈), COOH, NO₂, NO, COOAlkyl(C₁-C₈), COOPhenyl, CONHAlkyl(C₁-C₈), OAlkyl(C₁-C₈), OAryl, OCOAlkyl(C₁-C₈), OCOPhenyl, Alkenyl, Alkinyl bedeuten, R⁹ bis R¹¹ in (III) unabhängig voneinander Wasserstoff, Alkyl(C₁-C₁₂), Aryl wie zum Beispiel Phenyl, Naphthyl, F, Cl, CN, CF₃, CHO, COAlkyl(C₁-C₈), COOH, NO₂, NO, COOAlkyl(C₁-C₈), COOPhenyl, CONHAlkyl(C₁-C₈), OAlkyl(C₁-C₈), OAryl, OCOAlkyl(C₁-C₈), OCOPhenyl, Alkenyl, Alkinyl bedeuten, X in (IV) OM mit M einem einwertigen Kation wie Li, Na, K oder OH bedeuten, R¹² bis R¹⁶ in (IV) unabhängig voneinander Wasserstoff, Alkyl(C₁-C₁₂), Aryl wie zum Beispiel Phenyl, Naphthyl, F, Cl, Br, I, CN, CF₃, CHO, COAlkyl(C₁-C₈), COOH, NH₂, NHAlkyl(C₁-C₈), N(Alkyl(C₁-C₈))₂, NO₂, NO, COOAlkyl(C₁-C₈), CONHAlkyl(C₁-C₈), OH, OAlkyl(C₁-C₈), OAryl, OCOAlkyl(C₁-C₈), OCOPhenyl, Alkenyl, Alkinyl, Si(Alkyl(C₁-C₅))₃ bedeuten, wobei R¹⁶ und R¹⁵ oder R¹⁵ und R¹⁴ oder R¹⁴ und R¹³ oder R¹³ und R¹² auch Teil eines annelierten aromatischen oder nicht aromatischen Systems sein können.

14. Verfahren nach den Ansprüchen 1-13 **dadurch**
**gekennzeichnet, daß** als Lösungsmittel im allgemeinen aprotische und protische organische Lösemittel, mit Ausnahme von Carbonsäuren, sowie Wasser und Mischungen daraus, besonders bevorzugt zweiphasige Mischungen aus einem organischen Lösemittel und Wasser eingesetzt werden.

15. Verfahren nach den Ansprüchen 1-14 **dadurch**
**gekennzeichnet, daß** bei Verwendung eines nicht mischbaren Lösemittelgemisches aus organischem Solvens und Wasser (Zweiphasengemisch) sich der Katalysator ausschließlich in der der Polarität der Trägeroberfläche am ähnlichsten Phase findet, und die an der Reaktion beteiligten oder bei der Reaktion entstehenden Salze sich in der Wasserphase befinden.

16. Verfahren nach den Ansprüchen 1-15 **dadurch**
**gekennzeichnet, daß** bei Verwendung eines nicht mischbaren Lösemittelgemisches die den Katalysator enthaltende Phase einfach durch Dekantation abgetrennt wird.

17. Verfahren nach den Ansprüchen 1-16 **dadurch**
**gekennzeichnet, daß** das organische Lösemittel bzw. Lösemittelgemisch in der 0.1 bis 500 fachen, besonders bevorzugt in der 1 bis 100 fachen Gewichtsmenge, bezogen auf den eingesetzten substituierten Aromaten (I) oder das substituierte Olefin (II) bzw. das Boronsäurederivat (III), zugesetzt wird.

18. Verfahren nach den Ansprüchen 1-17 **dadurch**
**gekennzeichnet, daß** die verwendeten Basen Alkali- und Erdalkalimetallhydroxide wie LiOH, NaOH, KOH, RbOH, CsOH, Mg(OH)₂, Ca(OH)₂ oder Sr(OH)₂, Alkali- und Erdalkalimetallcarbonate wie Li₂CO₃, Na₂CO₃, K₂CO₃, Rb₂CO₃, Cs₂CO₃, MgCO₃, CaCO₃ oder SrCO₃, Alkalimetallhydrogencarbonate wie LiHCO₃, NaHCO₃, KHCO₃ RbHCO₃ oder CsHCO₃, Alkali- und Erdalkalimetallacetate wie LiOAc, NaOAc, KOAc, RbOAc, CsOAc, Mg(OAc)₂ oder Ca(OAc)₂, Alkali- und Erdalkalimetallformiate wie LiHCOO, NaHCOO, KHCOO, RbHCOO, CsHCOO, Mg(HCOO)₂, Ca(HCOO)₂ oder Sr(HCOO)₂, Alkali- und Erdalkalimetallalkoholate wie zum Beispiel LiO*t*Bu, NaO*t*Bu, KO*t*Bu, RbO*t*Bu, LiO*i*Bu, NaO*i*Bu, KO*i*Bu, RbO*i*Bu, LiOEt, NaOEt, KOEt, RbOEt, LiOMe, NaOMe, KOMe oder RbOMe, primäre, sekundäre und tertiäre Amine wie zum Beispiel Triethylamin, Ethyldiisopropylamin, Tri-*n*-butylamin, sowie Mischungen zweier und mehrerer Basen aus der gleichen Gruppe oder den verschiedenen Guppen sind.

19. Verfahren nach den Ansprüchen 1-18 **dadurch**
**gekennzeichnet, daß** die Base in einem Anteil von 100-500 mol% bezogen auf (I), (II) oder (IV) eingesetzt wird.

20. Verfahren nach den Ansprüchen 1-19 **dadurch**
**gekennzeichnet, daß** das erfindungsgemäße Verfahren bei Temperaturen zwischen 60 und 220 °C durchgeführt, bevorzugt zwischen 100 und 180 °C, besonders bevorzugt zwischen 120 und 160 °C (Heck-Reaktion) bzw. bei Temperaturen zwischen 40 und 180 °C, bevorzugt zwischen 60 und 140 °C, besonders bevorzugt zwischen 80 und 100 °C (Suzuki-Reaktion) durchgeführt wird.

21. Verfahren nach den Ansprüchen 1-20 **dadurch**
**gekennzeichnet, daß** der Druck, bei dem das erfindungsgemäße Verfahren durchgeführt wird, unkritisch ist, bevorzugt aber bei Atmosphärendruck gearbeitet wird.
